# EUROPEAN PATENT APPLICATION

(11) **EP 4 131 125 A1**
(43) Date of publication of application: **08.02.2023**
(21) Application number: 21776626.0
(22) Date of filing: 18.02.2021
(51) Int. Cl.: G06Q 40/02

(54) **LOAN PROCESSING SYSTEM AND LOAN PROCESSING METHOD**

(30) Priority: 23.03.2020 JP 2020050571
(71) Applicant: GLORY LTD., Himeji-shi Hyogo 670-8567 (JP); Socash Pte. Ltd., 528785 Singapore (SG)
(72) Inventor: HIGASHIYAMA, Minoru, Himeji-shi, Hyogo 670-8567 (JP); FUKUNISHI, Yuta, Himeji-shi, Hyogo 670-8567 (JP); SIVAN Hari Palaparambil, Savannah Condopark 528785 (SG)
(74) Representative: SSM Sandmair
(86) International application number: PCT/JP2021/006079
(87) International publication number: WO 2021/192751

(57) **Abstract**

In order to enable a store to efficiently repay borrowing to a creditor, a borrowing handling system for repayment of borrowing from the store to the creditor by using accounts at financial institutions, includes: a cash storage apparatus installed in the store, and configured to dispense cash that a user withdraws from an account of the user; and a management server configured to transmit an instruction for execution of account handling in which, out of a total amount of the cash dispensed from the cash storage apparatus for the user and a commission to be paid from a management company to the store, a repayment amount that the store allots for repayment of the borrowing is deposited into a repayment account for the borrowing, and a remaining amount is deposited into an account of the store, the instruction being transmitted to financial institutions corresponding to the respective accounts.

## Description

### TECHNICAL FIELD

The present disclosure relates to a borrowing handling system and a borrowing handling method which enable a user to repay a borrowing by using a bank account at a financial institution.

### BACKGROUND ART

Conventionally, various systems for handling borrowings generated by contracts have been used. For example, when a loan contract for repaying a loan by installments has been made, a debtor can repay the loan by periodically depositing a repayment amount into a repayment account set by a creditor. Depositing into the repayment account may be performed by the debtor who visits a financial institution and deposits cash into the repayment account. Alternatively, the depositing may be performed by account handling in which the repayment amount is withdrawn from a withdrawal account set by the debtor, and deposited into the repayment account. For example, Patent Literature 1 discloses a system in which a loan bankbook for a withdrawal account is formed, and information such as a repayment amount, repayment date, etc., are entered in the loan bankbook. Checking the loan bankbook allows confirmation of the details of repayment history.

### CITATION LIST

### [PATENT LITERATURE]

[PTL 1] Japanese Laid-Open Patent Publication No. 2002-297903

### SUMMARY OF THE INVENTION

### PROBLEMS TO BE SOLVED BY THE INVENTION

In the above conventional art, however, loan repayment cannot be efficiently performed in some cases. For example, in the method in which the debtor visits the financial institute for repayment, the debtor may forget the repayment. Even in the method of using the withdrawal account, account handling cannot be performed unless a balance exceeding the repayment amount remains on the withdrawal account. Therefore, the debtor needs to pay attention to the repayment date and the balance on the withdrawal account in order to make periodical repayment. If repayment by the debtor has not been made as scheduled, the creditor needs to remind the debtor about repayment or visit the debtor to collect money.

The present disclosure is made in view of the above problem, and an object of the present disclosure is to provide a borrowing handling system and a borrowing handling method which realizes efficient repayment of borrowings.

### SOLUTION TO THE PROBLEMS

A borrowing handling system according to the present disclosure is a system for repayment of borrowing from a store to a creditor by using accounts at financial institutions, and the system includes: a cash storage apparatus installed in the store, and configured to dispense cash that a user withdraws from an account of the user; and a management server configured to transmit an instruction for execution of account handling in which, out of a total amount of the cash dispensed from the cash storage apparatus for the user and a commission to be paid from a management company to the store, a repayment amount that the store allots for repayment of the borrowing is deposited into a repayment account for the borrowing, and a remaining amount is deposited into an account of the store, the instruction being transmitted to financial institutions corresponding to the respective accounts.

In the above configuration, the management server obtains, as the repayment amount, an amount calculated by multiplying the commission by a preset rate.

In the above configuration, the management server may change the amount of the commission, according to the amount of the cash dispensed from the cash storage apparatus for the user.

In the above configuration, the commission may be an amount obtained by subtracting a handling fee to be paid from the store to the management company for a borrowing repayment service performed by the management company, from a commission to be paid from the management company to the store for a cash dispensing service performed by the store for the user.

In the above configuration, the management server may transmit the instruction for execution of the account handling to the financial institutions, on a condition that the management server receives an approval of the account handling.

In the above configuration, when the management server has received an instruction to change the repayment amount, from the store, the management server may transmit, to the financial institutions, an instruction for execution of the account handling based on the repayment amount having been changed.

In the above configuration, the account handling may include: a process of moving the amount of the cash dispensed from the cash storage apparatus for the user, from the account of the user to an account of the management company; a process of moving the repayment amount from the account of the management company to the repayment account; and a process of moving the remaining amount from the account of the management company to the account of the store.

In the above configuration, when at least one of the repayment account and the account of the store is at a financial institution different from a financial institution at which the account of the user is present, the account handling may further include a process of moving a fund between accounts of the management company at the different financial institutions.

In the above configuration, the management server may manage information on transactions in which the user received cash at the store. When there are a plurality of transactions each requiring fund movements between accounts at different financial institutions, the management server may sum up amounts to be moved at the respective transactions, and may determine the content of the account handling so as to collectively handle the fund movements of the plurality of transactions by one fund movement.

In the above configuration, when there are a transaction requiring fund movement from a first financial institution to a second financial institution, and a transaction requiring fund movement from the second financial institution to the first financial institution, the management server may determine the content of the account handling such that an amount obtained by offsetting amounts to be moved by the respective fund movements are moved in one fund movement.

A borrowing handling method according to the present disclosure is a method for repayment of borrowing from a store to a creditor by using accounts at financial institutions, and the method includes: causing a cash storage apparatus installed in the store to dispense cash that a user withdraws from an account of the user; causing a management server to acquire information on an amount of the cash dispensed from the cash storage apparatus for the user; and causing the management server to transmit an instruction for execution of account handling in which, out of a total amount of the cash dispensed from the cash storage apparatus for the user and a commission to be paid from a management company to the store, a repayment amount that the store allots for repayment of the borrowing is deposited into a repayment account for the borrowing, and a remaining amount is deposited into an account of the store, the instruction being transmitted to financial institutions corresponding to the respective accounts.

### ADVANTAGEOUS EFFECTS OF THE INVENTION

According to the borrowing handling system and the borrowing handling method of the present disclosure, the user who visits a store can dispense cash withdrawn from his/her account at a financial institution, from the cash storage apparatus installed in the store. Thus, the user can obtain the cash even in the store having no ATM (Automatic Teller Machine), in the same way as the case of using an ATM. The store can obtain a commission from the management company by providing the user with a service similar to an ATM service. Out of the total amount of the cash dispensed from the cash storage apparatus and the commission to be paid to the store, the store can allot a part of the total amount for repayment and deposit it into a repayment account while the store can receive the remaining amount at the account of the store. Thus, repayment of borrowing can be efficiently performed.

### BRIEF DESCRIPTION OF THE DRAWINGS

[FIG. 1] FIG. 1 is a schematic diagram illustrating an outline of a borrowing handling system according to an embodiment.
[FIG. 2] FIG. 2 is a block diagram showing a configuration of the borrowing handling system.
[FIG. 3] FIG. 3 is a schematic diagram showing cash movement and account handling in a case where a bank account of a user, a bank account of a store, and a repayment account are at the same bank X.
[FIG. 4] FIG. 4 is a schematic diagram showing cash movement and account handling in a case where the bank account of the user and the bank account of the store are at the same bank, and the repayment account is at another bank.
[FIG. 5] FIG. 5 is a schematic diagram showing cash movement and account handling in a case where the bank account of the user and the repayment account are at the same bank, and the bank account of the store is at another bank.
[FIG. 6] FIG. 6 is a schematic diagram showing cash movement and account handling in a case where the bank account of the store and the repayment account are at the same bank, and the bank account of the user is at another bank.
[FIG. 7] FIG. 7 is a schematic diagram showing cash movement and account handling in a case where the bank account of the user, the bank account of the store, and the repayment account are at different banks.
[FIG. 8] FIG. 8 is a schematic diagram showing a flow of processes in the case where the bank account of the user, the bank account of the store, and the repayment account are at the same bank.
[FIG. 9] FIG. 9 is a schematic diagram showing a flow of processes in the case where the bank account of the user and the bank account of the store are at the same bank, and the repayment account is at another bank.
[FIG. 10] FIG. 10 is a schematic diagram showing a flow of processes in the case where the bank account of the user and the repayment account are at the same bank, and the bank account of the store is at another bank.
[FIG. 11] FIG. 11 is a schematic diagram showing a flow of processes in the case where the bank account of the store and the repayment account are at the same bank, and the bank account of the user is at another bank.
[FIG. 12] FIG. 12 is a schematic diagram showing a flow of processes in the case where the bank account of the user, the bank account of the store, and the repayment account are at different banks.
[FIGS. 13A and 13B] FIGS. 13A and 13B illustrate handling in which a management server determines the content of transfer.

### DESCRIPTION OF EMBODIMENTS

Hereinafter, a borrowing handling system and a borrowing handling method according to the present disclosure will be described with reference to the accompanying drawings. In the borrowing handling system according to an embodiment of the present disclosure, repayment of borrowing is performed by using accounts at a financial institution. Although the type of the financial institution is not particularly limited, a bank is adopted in this embodiment.

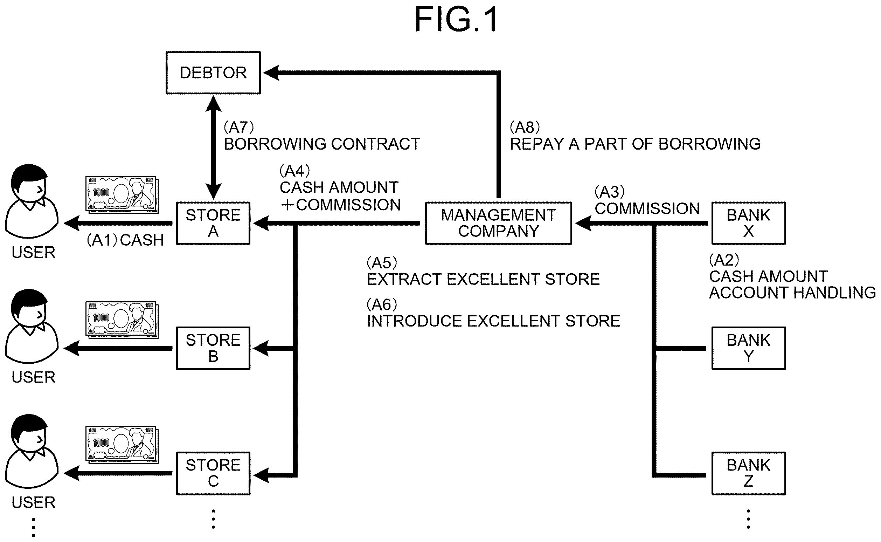

FIG. 1 is a schematic diagram illustrating an outline of the borrowing handling system according to the present embodiment. A customer who has an account at a bank, i.e., a holder of a bank account, visits a store in order to receive cash withdrawn from the bank account. In the present embodiment, this customer is referred to as a user.

The user receives, at the store, cash withdrawn from his/her bank account without using an ATM (Automated Teller Machine) (A1). For example, the store dispenses the cash that the user withdraws from the bank account, from a cash handling apparatus (cash storage apparatus), and passes the cash to the user. When the cash passing/receiving transaction has been performed between the store and the user, a bank at which the user has the bank account performs account handling for moving an amount equivalent to the cash received by the user, from the bank account of the user to a bank account of a management company that manages the borrowing handling system (A2). The bank pays a commission to the management company that has enabled the user to perform cash withdrawal at the store (A3). This commission is deposited into the bank account of the management company.

The management company pays a commission to the store that has passed in place of the bank the cash to the user. The management company returns, to the store, an amount obtained by adding the commission to the amount of cash that the store has passed to the user (A4). That is, the store can receive the commission in addition to the amount of cash passed to the user.

A large commission will be paid from the management company to a store where many users have visited to receive cash. In the management company, a process of extracting, as an excellent store, a store that satisfies a predetermined condition on commissions is performed (A5). For example, a store is determined as an excellent store on condition that the total amount of commissions having been paid from the management company to the store within a predetermined period exceeds a predetermined amount continuously and stably. Specifically, if a state, where the total amount of commissions paid to a store within a month exceeds a predetermined amount, continues over one year or more, this store is determined as an excellent store, for example. For another example, total amounts of commissions paid to stores within a predetermined period are compared with each other, and several high-ranking stores are determined as excellent stores. Likewise, on the number of times of the commission payment, if the number of times the management company has paid commissions to a store within a predetermined period exceeds a predetermined number continuously and stably, this store is determined as an excellent store, for example. For another example, several high-ranking stores are determined as excellent stores, from the first-ranking store to which the management company has paid commissions the largest number of times within the predetermined period. The number of times of transactions, in which a store has passed cash to users in place of the bank, becomes larger, a possibility that the store is determined as an excellent store becomes higher. A management server described later automatically performs the above determinations, and displays the determination results on a display unit or the like to notify the management company of these results.

The management company can introduce an excellent store extracted by the management server as described above, to parties who want store information (A6). Examples of the parties include a bank, and a sales company of products to be used by the store. The management company can obtain a referral commission from a party to which the management company introduced the store. The bank can offer financing to the store introduced by the management company. The sales company can offer purchase or lease of the product to the store introduced by the management company.

The store can make a borrowing contract, such as a contract for financing from the bank, a loan contract for purchasing the product from the sales company, or a lease contract for the product (A7). When the borrowing contract has been established, the store splits the borrowing and repays the borrowing to the creditor such as the bank, the sales company, or the like.

The store can allot the amount received from the management company, for repayment of the borrowing. Specifically, when the management company returns, to the store that has passed the cash to the user in place of the bank, a total amount of the cash and the commission, the management company repays, to the creditor, a part of the total amount to be returned to the store (A8). The amount to be allotted for repayment to the creditor can be set by the store. For example, the store sets, as the repayment amount, an amount obtained by multiplying the commission received from the management company by a predetermined rate. The repayment amount thus set is deposited into a bank account that is prepared for the store to repay the borrowing to the creditor. The bank account receiving the deposited amount may be an account of the creditor, or a withdrawal account of the store from which the amount to be repaid is withdrawn and transferred into the account of the creditor. The management company that handles the repayment amount in place of the store can receive, from the store, a handling fee for the repayment. The account handling for the repayment amount and the commission/handling fee is performed according to an instruction from the management server to the bank, which will be described later in detail.

As described above, the bank can make a financing contract with the store that is introduced to the bank as an excellent store extracted by the management server from among many stores. The bank can acquire, from the management company, information on commissions paid from the management company to the store in the past, and determine a borrowing repayment method for the store, based on the acquired information. Likewise, the sales company can make a contract for purchase or lease of the product with the store introduced to the sales company, and determine a borrowing repayment method for the store. In this embodiment, repayment of the borrowing to the sales company includes repayment of a loan, and payment of lease fees.

The store, which has passed to the user cash withdrawn by the user from his/her bank account, can allot a part of the total amount of the cash passed to the user by the store in place of the bank and the commission received from the management company, for repayment of the borrowing. Specifically, out of the total amount of the cash to be returned from the management company to the store and the commission to be paid from the management company to the store, a part is deposited as the repayment amount into the bank account for loan repayment while the remaining amount is deposited into the bank account of the store. Thus, the store need not visit the bank for repayment of the borrowing or pay attention to the balance in the withdrawal account for the repayment. Also, the bank or the sales company with which the store has made the borrowing contract need not remind the store about repayment or visit the store to ask for the repayment.

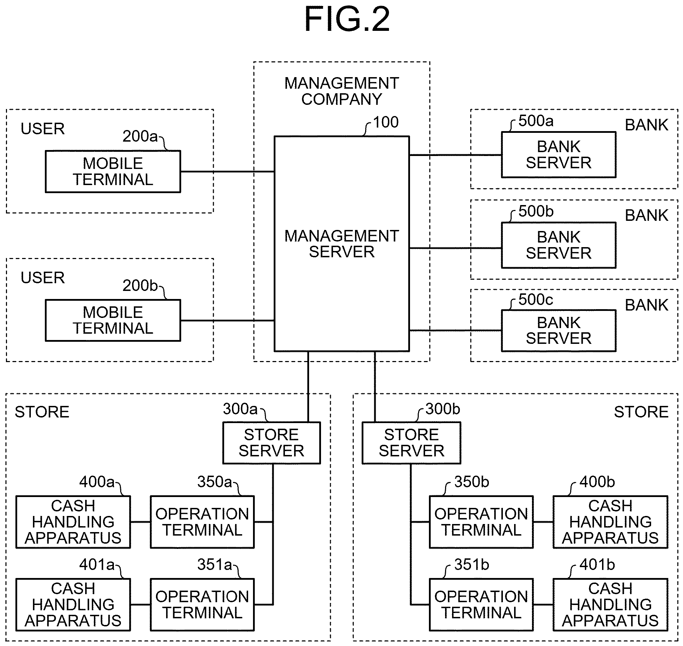

FIG. 2 is a block diagram showing a configuration of a borrowing handling system according to the present embodiment. The borrowing handling system includes a management server 100, mobile terminals 200 (200a, 200b), store servers 300 (300a, 300b), operation terminals 350 (350a, 350b), 351 (351a, 351b), cash handling apparatuses 400 (400a, 400b), 401 (401a, 401b), and bank servers 500 (500a to 500c).

The number of users, stores, and banks shown in FIG. 2 is merely an example, and is not particularly limited. Each store shown in the example includes two sets of operation terminals and cash handling apparatuses, but the number thereof is also not particularly limited. The function and operation of the operation terminals 351 are substantially the same as those of the operation terminals 350. Likewise, the function and operation of the cash handling apparatuses 401 are substantially the same as those of the cash handling apparatuses 400. Therefore, with respect to the operation terminals 350, 351 and the cash handling apparatuses 400, 401, a description will be given for the operation terminal 350 and the cash handling apparatus 400.

The management server 100 is installed in, for example, a management company that manages the borrowing handling system. The management server 100 is a computer device operable by an operation terminal not shown in FIG. 2. However, the management server 100 may be a computer device including an operation unit and a display unit. The management server 100 is communicably connected to the mobile terminals 200, the store servers 300, and the bank servers 500, wirelessly or via wires.

Each mobile terminal 200 is a portable communication terminal possessed by a user. For example, a smartphone or a tablet computer is used as the mobile terminal 200. The user can receive, at a store, cash withdrawn from his/her bank account by using the mobile terminal 200. When the user receives the cash at the store, the mobile terminal 200 is used for transmitting/receiving information to/from the operation terminal 350 of the store.

The store server 300, the operation terminal 350, and the cash handling apparatus 400 are installed in the store. The store server 300 is a computer device including an operation unit and a display unit, for example. The store server 300 is communicably connected to the operation terminal 350. The store server 300 acquires information on the cash handling apparatus 400 from the operation terminal 350. The store server 300 can acquire and manage information on an inventory quantity of cash stored in the cash handling apparatus 400, i.e., information on denominations and the quantity for each denomination of the cash.

The operation terminal 350 includes an operation unit, a display unit, and a reading device for acquiring information from the mobile terminal 200. For example, a camera or a scanner is used as the reading device. The operation terminal 350 transmits/receives information to/from the mobile terminal 200 possessed by the user. The cash handling apparatus 400 dispenses cash that the store passes to the user. The operation terminal 350 is communicably connected to the cash handling apparatus 400. The operation terminal 350 manages cash currently stored in the cash handling apparatus 400. A clerk of the store can control the cash handling apparatus 400 by operating the operation terminal 350 to dispense the cash stored in the cash handling apparatus 400.

For example, a cash register, which is used for checkout at a checkout counter in the store when a customer purchases items, is used as the operation terminal 350, and a change machine connected to the cash register is used as the cash handling apparatus 400.

The configurations of the operation terminal 350 and the cash handling apparatus 400 are not particularly limited as long as cash can be dispensed from the cash handling apparatus 400. The operation terminal 350 and the cash handling apparatus 400 may not necessarily be separated bodies, and may be integrated with each other. For example, a self-checkout machine may function as the operation terminal 350 and the cash handling apparatus 400. For another example, a semi-self-checkout machine may function as the operation terminal 350 and the cash handling apparatus 400. A vending machine used for selling items in the store may function as the operation terminal 350 and the cash handling apparatus 400. An automatic settlement machine used for payment of utility fees or the like in the store may function as the operation terminal 350 and the cash handling apparatus 400.

The bank server 500 is installed in a bank, for example. The bank server 500 performs account handling for moving funds between a plurality of bank accounts. The account handling includes a transfer process of moving a fund between bank accounts at the same bank, and a transfer process of moving a fund from a bank account at the bank to a bank account at another bank.

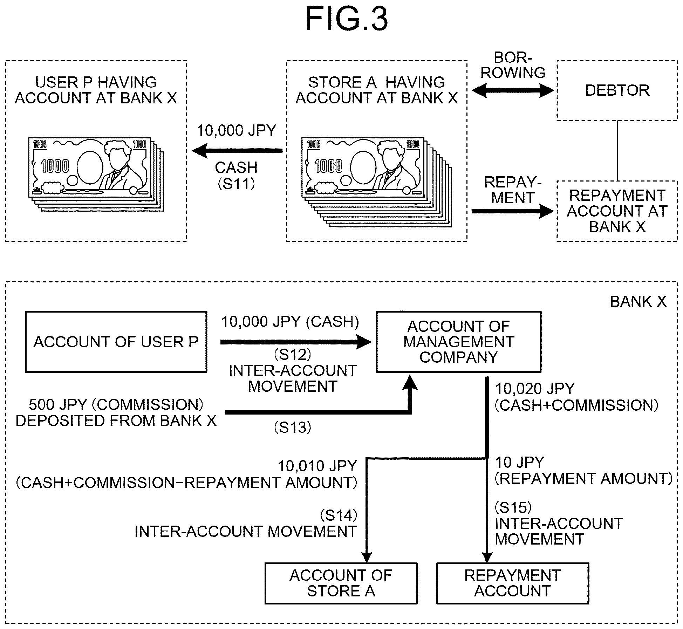

An outline of cash movement and account handling in the borrowing handling system will be described with reference to FIGS. 3 to 7. FIGS. 3 to 7 each show a method for a store having made a borrowing contract with a creditor to repay the borrowing to the creditor. The borrowing contract includes financing, loan, and lease. The amount of repayment by the store may be set by the store. Hereinafter, a case where a part of a commission that the store receives from the management company is allotted for the repayment, will be described. A repayment account into which the repayment amount is deposited may be a bank account of the creditor, or may be a withdrawal account of the store from which the amount to be repaid to the bank account of the creditor is withdrawn. Hereinafter, a case where the repayment amount is directly deposited into the bank account of the creditor, will be described.

After the user has received, at the store, cash withdrawn from his/her bank account, an account handling of the amount of this cash, i.e., the cash that the store has dispensed from the cash handling apparatus 400 and passed to the user, is performed to move from the bank account of the user to the bank account of the store. The management company pays a commission to the store, and a part of this commission is allotted to repayment of the borrowing of the store. Therefore, account handling for moving an amount corresponding to a part of the commission from the bank account of the management company to the bank account of the creditor (hereinafter referred to as "repayment account") prepared for the store to repay the borrowing, is performed, and account handling for moving an amount corresponding to the rest of the commission from the bank account of the management company to the bank account of the store, is performed. The content of the account handling varies depending on whether the user's bank account, the store's bank account, and the repayment account are at the same bank or at different banks. Here, the "accounts at the same bank" mean accounts for which no handling fee is charged on movement of a fund between these accounts, while the "accounts at different banks" mean accounts for which a handling fee is charged on movement of a fund between these accounts. FIGS. 3 to 7 show cases where combinations of the banks at which the respective accounts are present are different from each other. In each of FIGS. 3 to 7, the relationship between the user, the store, and the creditor, the banks of the respective bank accounts, and movement of cash are shown in the upper stage, and account handling is shown beneath them.

FIG. 3 is a schematic diagram showing cash movement and account handling in a case where the bank account of a user P, the bank account of a store A, and the repayment account are at the same bank X. For example, the user P, who wants to withdraw cash of 10,000 JPY from his/her bank account at the bank X, goes to the store A, and receives cash of 10,000 JPY as shown in FIG. 3 (step S11).

Immediately after the cash has been passed from the store A to the user P, a transfer of moving a fund of 10,000 JPY from the bank account of the user P to the bank account of the management company is performed at the bank X (step S12). This avoids the situation that the balance in the bank account of the user P becomes insufficient and less than 10,000 JPY and therefore 10,000 JPY cannot be obtained from the bank account of the user P. The amount of the fund moved from the bank account of the user P to the bank account of the management company is equal to the amount of the cash that the user P has received at the store A. That is, the user P can receive the cash of 10,000 JPY withdrawn from his/her bank account, at the store A, without paying a handling fee.

The bank X, which could pass to the user P the cash withdrawn from the user's bank account at the store A having no ATM, pays a predetermined commission to the management company that provides this system (step S13). For example, the bank X deposits 5% of the amount received by the user P, as the commission, into the bank account of the management company at the bank X. The commission is 500 JPY when the user P has received 10,000 JPY at the store A.

The management company pays a predetermined commission to the store A that has passed the cash to the user P in place of the bank X. For example, the management company pays 0.2% of the amount received by the user P, as the commission to the store. The commission to be received by the store A is 20 JPY when the user P has received 10,000 JPY at the store A. The store A can allot a part of this commission to repayment of the borrowing. The rate to be allotted to repayment may be set in advance. Hereinafter, the description continues on the assumption that the repayment amount is set to 50% of the commission.

Since the commission to be paid from the management company to the store A is 20 JPY, 10 JPY corresponding to 50% of 20 JPY is the repayment amount that the store A repays to the creditor. The management company performs a transfer of moving a fund of 10,010 JPY, which is the sum of 10,000 JPY received from the bank account of the user P and 10 JPY obtained by subtracting the repayment amount of 10 JPY from the commission of 20 JPY to be paid to the store A, from the bank account of the management company to the bank account of the store A (step S14). Furthermore, the management company performs a transfer between the bank account of the management company and the repayment account in order to deposit, into the repayment account, the repayment amount of 10 JPY out of the commission to be paid to the store A (step S15). The amount for each repayment is small. However, since such repayment is performed many times a day, the repayment amount from the store in a month, for example, becomes large. Thus, by dispensing cash from the cash handling apparatus 400 and passing the dispensed cash to the user P, the store A can deposit the amount of the cash into the bank account of the store A. In addition, the store A can obtain the commission from the management company, deposit a part of the commission into the repayment account while depositing the rest of the commission into the bank account of the store A.

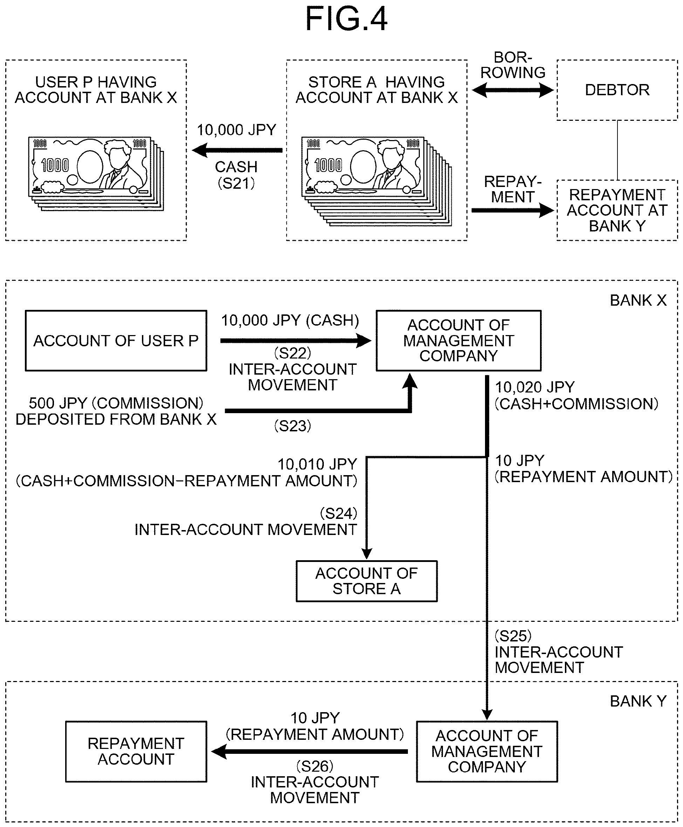

FIG. 4 is a schematic diagram showing cash movement and account handling in a case where the bank account of the user P and the bank account of the store A are at the bank X while the repayment account is at the bank Y. Since the processes from step S21, in which the user P receives the cash at the store A withdrawn from the bank account, to step S24, in which the store A receives, into the bank account, the amount of the cash passed to the user P and a part of the commission obtained from the management company, are the same as those in steps S11 to S14 shown in FIG. 3, repeated description is omitted.

The management company has bank accounts at both the bank X and the bank Y. The management company performs a transfer between the bank account at the bank X and the bank account at the bank Y, in order to deposit 10 JPY, out of the commission to be paid to the store A, into the repayment account at the bank Y (step S25). Account-to-account transfer is account handling performed free of charge between bank accounts at the same bank. Meanwhile, bank-to-bank transfer is account handling performed between bank accounts at different banks and therefore, the management company having performed the bank-to-bank transfer has to pay a transfer fee to the bank X. In order to suppress the amount of the transfer fee, the management company handles a plurality of processes that need fund movements between different banks collectively by one transfer, which will be described later.

In order to deposit the repayment amount of 10 JPY from the store A into the repayment account, the management company performs a transfer between the bank account of the management company and the repayment account at the bank Y (step S26).
Thus, even when the repayment account and the bank account of the store A are at different banks, the store A can deposit a part of the commission obtained from the management company, into the repayment account.

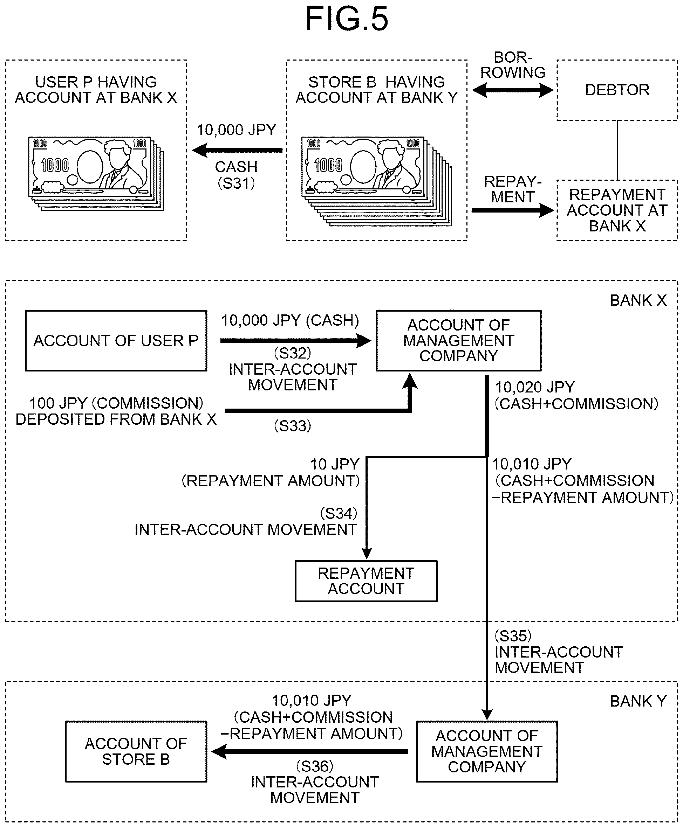

FIG. 5 is a schematic diagram showing cash movement and account handling in a case where the bank account of the user P and the repayment account are at the bank X while a bank account of a store B is at the bank Y. The user P, who wants to withdraw cash of 10,000 JPY from his/her bank account at the bank X, goes to the store B and receives cash of 10,000 JPY (step S31).

Immediately after the user P has received the cash at the store B, a transfer of moving a fund equivalent to the cash of 10,000 JPY that the user P has received at the store B is performed from the bank account of the user P at the bank X to the bank account of the management company at the bank X (step S32) .

The bank X pays a predetermined commission to the bank account of the management company (step S33). The commission to be paid from the bank X to the management company can vary between the case where the store having passed the cash to the user P has a bank account at the bank X like the user P and the case where the store has a bank account at the bank Y unlike the user P. The bank account of the store B is at the bank Y. Therefore, the bank X deposits, for example, 100 JPY corresponding to 1% of the amount received by the user P, as the commission, into the bank account of the management company at the bank X.

The management company pays a predetermined commission to the store B that has passed the cash to the user P in place of the bank X. For example, the management company pays 20 JPY corresponding to 0.2% of the amount received by the user P, as the commission to the store B. Out of the commission of 20 JPY to be paid from the management company to the store B, 10 JPY corresponding to 50%, which has been set in advance, is handled as the repayment amount. The management company performs a transfer between the bank account of the management company and the repayment account, in order to deposit the repayment amount of 10 JPY, out of the commission to be paid to the store B, into the repayment account (step S34).

The management company performs a transfer of moving a fund of 10,010 JPY which is the sum of 10,000 JPY received from the bank account of the user P, and an amount obtained by subtracting the repayment amount of 10 JPY from the commission of 20 JPY to be paid to the store B, from the bank account of the management company at the bank X to the bank account of the management company at the bank Y (step S35). The management company performs a transfer of moving the fund of 10,010 JPY having been moved in step S35, from the bank account of the management company at the bank Y to the bank account of the store B at the bank Y (step S36).

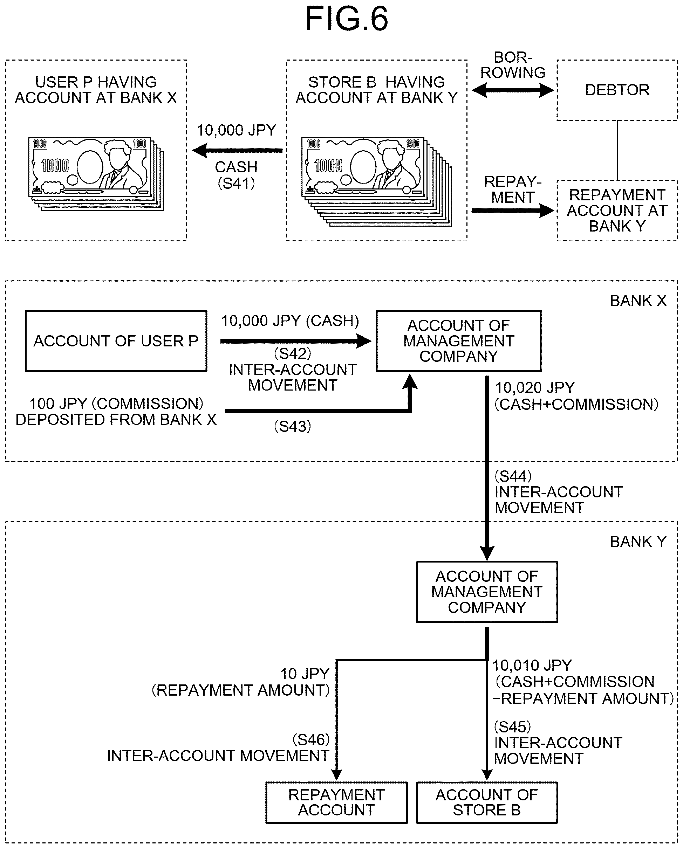

FIG. 6 is a schematic diagram showing cash movement and account handling in a case where the bank account of the store B and the repayment account are at the bank Y while the bank account of the user P is at the bank X. Since the processes from step S41, in which the user P receives the cash withdrawn from the bank account at the store B, to step S43, in which the bank X deposits the commission into the bank account of the management company, are performed in the same way as those in steps S31 to S33 shown in FIG. 5, repeated description is omitted.

The management company pays a predetermined commission of 20 JPY to the store B that has passed cash to the user P in place of the bank X. The management company performs a transfer of moving a fund of 10,020 JPY which is the sum of 10,000 JPY received at the bank account at the bank X from the bank account of the user P, and the commission of 20 JPY to be paid to the store B, from the bank account of the management company at the bank X to the bank account of the management company at the bank Y (step S44).

The management company performs a transfer of moving a fund of 10,010 JPY which is the sum of 10,000 JPY received from the bank account of the user P, and an amount obtained by subtracting the repayment amount of 10 JPY from the commission of 20 JPY to be paid to the store B, from the bank account of the management company at the bank Y to the bank account of the store B at the bank Y (step S45). The management company performs a transfer between the bank account of the management company at the bank Y and the repayment account at the bank Y, in order to deposit the repayment amount of 10 JPY, out of the commission to be paid to the store B, into the repayment account (step S46) .

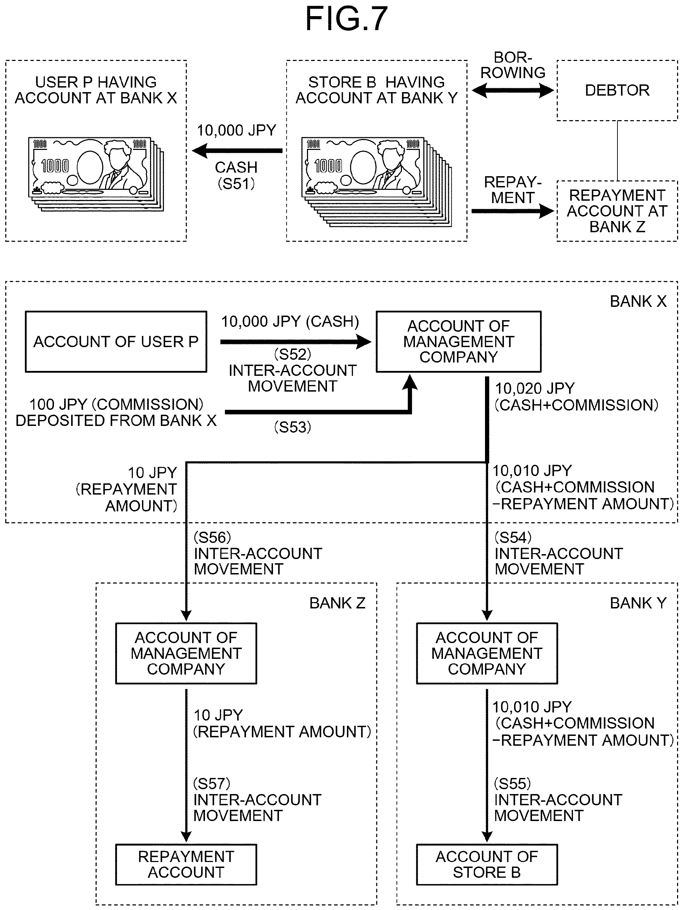

FIG. 7 is a schematic diagram showing cash movement and account handling in a case where the bank account of the user P, the bank account of the store B, and the repayment account are at different banks X to Z, respectively. The bank account of the user P is at the bank X, the bank account of the store B is at bank Y, and the repayment account is at the bank Z. The management company has bank accounts at all the banks X, Y, and Z. Since the processes from step S51, in which the user P receives the cash withdrawn from the bank account at the store B, to step S53, in which the bank X deposits the commission into the bank account of the management company, are performed in the same way as those in steps S41 to S43 shown in FIG. 6, repeated description is omitted.

The management company performs a transfer of moving a fund of 10,010 JPY which is the sum of 10,000 JPY received from the bank account of the user P, and an amount obtained by subtracting the repayment amount of 10 JPY from the commission of 20 JPY to be paid to the store B, from the bank account of the management company at the bank X to the bank account of the management company at the bank Y (step S54). The management company performs a transfer of moving the fund of 10,010 JPY having moved in step S54, from the bank account of the management company at the bank Y to the bank account of the store B at the bank Y (step S55).

The management company performs a transfer between the bank account of the management company at the bank X and the bank account of the management company at the bank Y, in order to deposit the repayment amount of 10 JPY, out of the commission to be paid to the store B, into the repayment account at the bank Y (step S56). The management company performs a transfer between the bank account of the management company at the bank Y and the repayment account at the bank Y to deposit the repayment amount of 10 JPY by the store B into the repayment account (step S57) .

As described above, by dispensing cash from the cash handling apparatus 400 and passing the dispensed cash to the user P, the store B can deposit the amount of the cash into the bank account of the store B. In addition, the store B can obtain the commission from the management company, deposit a part of the commission into the repayment account while depositing the rest of the commission into the bank account of the store B.

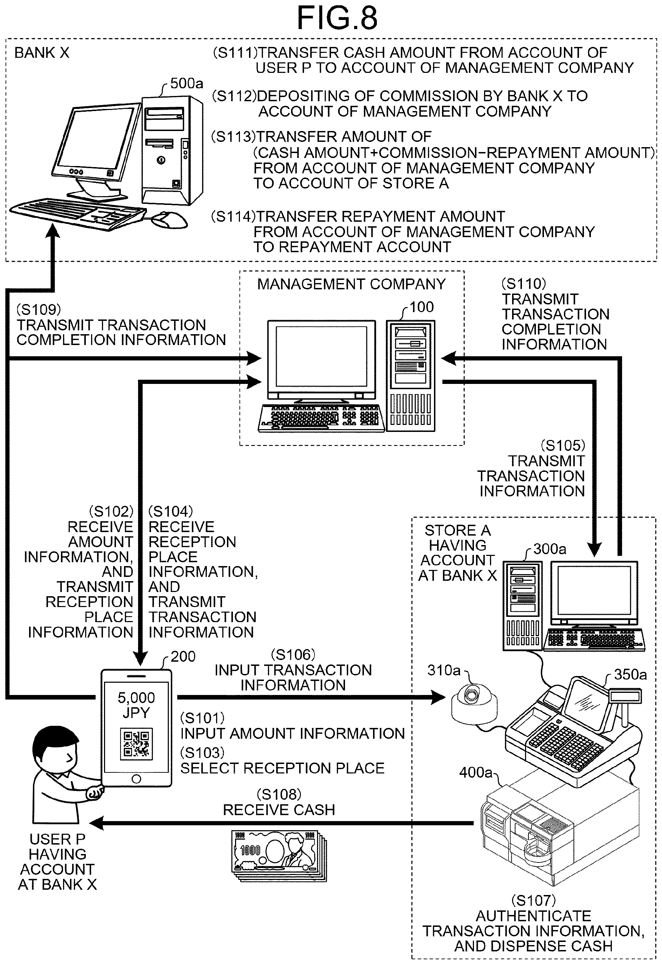

Methods for the borrowing handling system to realize the handlings shown in FIGS. 3 to 7 will be described with reference to FIGS. 8 to 12. FIGS. 8 to 12 correspond to FIGS. 3 to 7, respectively. FIG. 8 is a schematic diagram showing a flow of processes in the case where the bank account of the user P, the bank account of the store A, and the repayment account are at the same bank X.

The user P, who wants to withdraw cash from his/her bank account at the bank X, starts a dedicated application by operating the mobile terminal 200, and inputs a withdrawal amount, as shown at the lower left of FIG. 8 (step S101).

The management server 100 receives information on the amount inputted to the mobile terminal 200, and transmits, to the mobile terminal 200, information on stores at which the user P can receive the cash (step S102).

Specifically, first, the management server 100 confirms that the amount of cash that the user P wants to withdraw from the bank account does not exceed the balance on the bank account of the user P. For example, the management server 100 internally manages information on the bank account of each user and performs the confirmation based on this information. Alternatively, for example, the management server 100 transmits the withdrawal amount requested by the user P to the bank server 500a of the bank X, and requests the bank server 500a to confirm that the requested withdrawal amount does not exceed the balance on the bank account of the user P. If the amount inputted to the mobile terminal 200 exceeds the balance on the bank account, the management server 100 displays information indicating this on the screen of the mobile terminal 200 and requests the user P to change the amount.

Upon confirming that the withdrawal amount requested by the user P does not exceed the balance on the bank account of the user P, the management server 100 searches for stores that can pass the cash to the user P from among a plurality of stores that use the borrowing handling system. For example, the management server 100 internally manages information on cash that each store can pass to the user, and searches for stores based on this information. Alternatively, for example, the management server 100 transmits the withdrawal amount requested by the user P to the store server 300 of each store, and inquires whether or not the store can pass the cash to the user P, thereby searching for stores. Still alternatively, the cash handling apparatus 400 may constantly notify the management server 100 of an amount that the cash handling apparatus 400 can dispense for users, and the management server 100, based on the notification, may determine whether or not the cash handling apparatus 400 can dispense the requested amount, thereby searching for stores.

For example, the store server 300a determines whether or not to pass the cash to the user, based on whether or not the store is open and whether or not the store is crowded, and notifies the management server 100 of the determination result. This determination may be automatically performed by the store server 300a based on the status of use of the cash handling apparatus 400a (how crowded the store is) within a predetermined period. Alternatively, the determination may be manually performed by the clerk through an operation on the store server 300a or the operation terminal 350a. When the determination result is that the store cannot pass the cash to the user, the management server 100 is notified of this determination result and excludes this store from a list of stores capable of dispensing the cash.

Thus, the store can suspend the service of passing cash to the user, through the automatic determination by the store server 300a or the manual operation by the clerk. Even when the management server 100 automatically searches for stores by using the internally managed information, suspension and resumption of the service in the store can be requested to the management server 100 through the automatic determination by the store server 300 or the manual operation by the clerk. Examples of the clerk who operates the store server 300 include a manager and a person in charge of the store.

The management server 100 acquires, from the mobile terminal 200 possessed by the user P, position information indicating the current position of the mobile terminal 200. The management server 100 creates a list of stores capable of passing the requested amount of cash to the user P within a predetermined distance range centered around the current position of the user P. At this time, the management server 100 can reflect additional information, such as user's ratings for the stores, on the list. For example, the management server 100 can preferentially include a highly-rated store in the list, based on data in which ratings by users who used the stores in the past are numerically expressed for each store. The management server 100 transmits the created list to the mobile terminal 200.

The user P checks the store list received from the management server 100, on the screen of the mobile terminal 200. By operating the mobile terminal 200, the user P selects the store A, from among the stores in the store list, as a store at which he/she will receive the cash (step S103).

The management server 100 receives the selection result of the user P from the mobile terminal 200, creates transaction information for the user P to receive the cash at the store A, and transmits the transaction information to the mobile terminal 200 (step S104). For example, the transaction information includes: user identification information (user ID) for identifying the user P; store identification information (store ID) for identifying the store A selected by the user P; information on cash that the user P receives from the store A; and authentication information for the cash receiving transaction.

The authentication information included in the transaction information is a one-time password, for example. A third party cannot know the one-time password. Therefore, the third party cannot counterfeit the transaction information and impersonate the user P, whereby security of the cash passing/receiving transaction performed at the store can be ensured.

The management server 100 transmits the transaction information to the store server 300a of the store A selected by the user P (step S105). In order to keep the cash to be passed to the user P in the store A, the store server 300a starts management of cash currently stored in the cash handling apparatus 400a. Specifically, denominations and the quantity for each denomination of cash in the cash handling apparatus 400a are managed so that the user P can receive the requested amount of cash when he/she arrives at the store A.

The user P goes to the store A selected with the mobile terminal 200. The mobile terminal 200 generates a graphic code in which the transaction information received from the management server 100 is encoded. The mobile terminal 200 displays the generated graphic code on the screen. Although the type of the graphic code is not particularly limited, the description continues hereinafter on the assumption that the graphic code is a QR code (registered trademark).

A camera 310a is connected to the operation terminal 350a of the store A. The camera 310a functions as a reading device with which the operation terminal 350a acquires information from the mobile terminal 200. The user P, having arrived at the store A, causes the camera 310a to read the QR code displayed on the screen of the mobile terminal 200 (step S106). At this time, the operation terminal 350a can capture and save an image of the user P by using the camera 310a. If a problem occurs later, the image of the user P captured at this time is used.

The operation terminal 350a decodes the QR code read by the camera 310a to acquire the transaction information. Based on the information such as the user ID included in the transaction information acquired from the QR code, the operation terminal 350a acquires the corresponding transaction information from the store server 300a. The operation terminal 350a collates the transaction information acquired from the mobile terminal 200 with the transaction information that the store server 300a has received from the management server 100.

The operation terminal 350a authenticates the user P, based on the authentication information included in the transaction information. Specifically, the operation terminal 350a confirms that the same authentication information is included in both the transaction information acquired from the mobile terminal 200 and the transaction information acquired from the management server 100. When there is a match in authentication information, the authentication process is normally ended. If the authentication process has not been normally ended, the operation terminal 350a performs a notification process. For example, the operation terminal 350a notifies the clerk that correct authentication information is not included in the transaction information, by displaying the same on the screen. Upon receiving the notification, the clerk can confirm the transaction information and the identity of the user P.

The authentication process may be performed by the store server 300a that acquires the transaction information of the mobile terminal 200 from the operation terminal 350a. As for the method of transmitting/receiving information between the mobile terminal 200 and the operation terminal 350a, the operation terminal 350a may display, on the display unit, a QR code in which the transaction information acquired from the management server 100 is encoded, and the user P may read the QR code by using the mobile terminal 200. In this case, the authentication process is performed by the mobile terminal 200. If there is an abnormality in the authentication information, information indicating the abnormality is transmitted from the mobile terminal 200 to the operation terminal 350a via the management server 100 and the store server 300a, and notification of the information to the clerk is performed on the operation terminal 350a.

When the authentication process has been normally ended, the operation terminal 350a dispenses cash equivalent to the amount requested by the user P from the cash handling apparatus 400a (step S107). The user P receives the cash dispensed from the cash handling apparatus 400a (step S108). Thus, the user P can receive, at the store A, the cash equivalent to the amount inputted in step S101.

The user P, having received the cash, performs a transaction completion operation on the mobile terminal 200, and the mobile terminal 200 transmits completion information indicating completion of the transaction to the bank server 500a of the bank X and the management server 100 (step S109). After the cash handling apparatus 400a has dispensed the cash to be passed to the user P, the clerk of the store A performs a transaction completion operation on the operation terminal 350a, whereby the operation terminal 350a notifies the store server 300a that the transaction has been completed. Upon receiving the notification, the store server 300a transmits the completion information to the management server 100 (step S110). Thus, in the borrowing handling system 1, transmission/reception of the completion information allows the bank and the management company to confirm that the user has received the cash at the store.

For example, the completion information includes: the user ID of the user P; information for identifying the bank account of the user P; the store ID of the store A; information for identifying the bank account of the store A; information on the cash that the user P has received from the store A; and information on date and time of transaction completion.

The bank server 500a of the bank X identifies, based on the completion information, the amount of the cash that the user P has received at the store A. Moreover, the bank server 500a identifies, based on the completion information, the bank account of the user P and the bank account of the store A.

The bank server 500a performs a transfer of moving a fund equivalent to the amount of the cash received by the user P, from the bank account of the user P to the bank account of the management company (step S111). The bank server 500a calculates, based on settings prepared in advance, a commission to be paid from the bank to the management company. The bank server 500a deposits the commission that the bank X pays to the management company, into the bank account of the management company (step S112).

The bank server 500a calculates, based on settings prepared in advance, a commission to be paid from the management company to the store A, and a repayment amount, out of the commission, to be deposited into the repayment account. Alternatively, the management server 100 may calculate the commissions and the repayment amount, and notify the bank server 500a of them.

The bank server 500a performs a transfer of an amount that is obtained by subtracting the repayment amount from a total amount of the cash received by the user P at the store A and the commission to be paid from the management company to the store A, from the bank account of the management company to the bank account of the store A (step S113). Moreover, the bank server 500a performs a transfer of the repayment amount from the bank account of the management company to the repayment account (step S114).

The completion information may not necessarily be transmitted from both the mobile terminal 200 and the store server 300a to the management server 100, and may be transmitted from one of the mobile terminal 200 and the store server 300a. The bank server 500a having received the completion information may not necessarily perform the account handling by itself. The account handling through steps S111 to S114 may be performed when the management server 100 having received the completion information instructs the bank server 500a to perform the account handling.

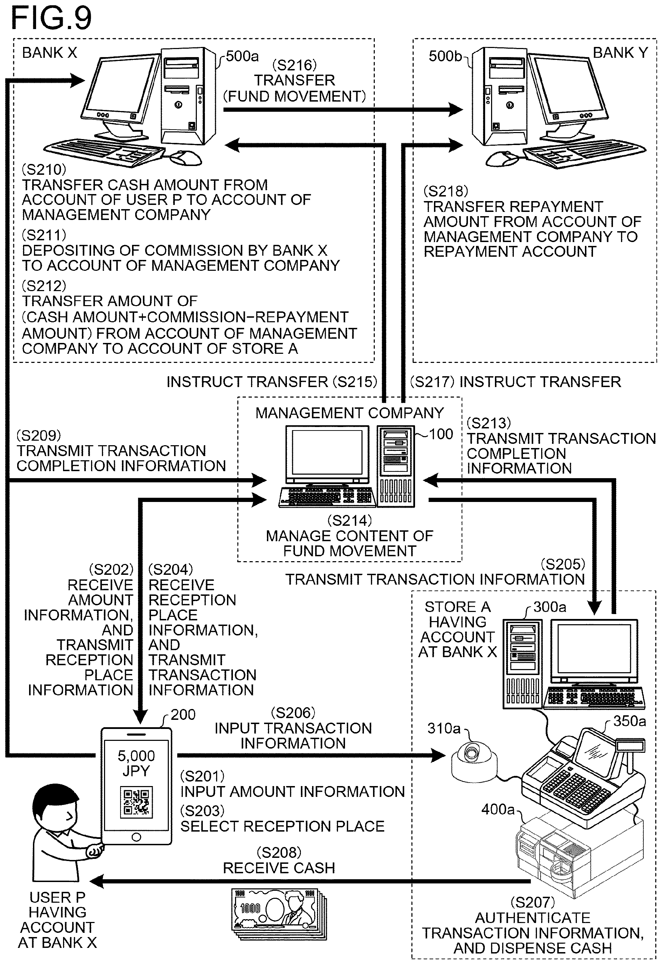

FIG. 9 is a schematic diagram showing a flow of processes in the case where the bank account of the user P and the bank account of the store A are at the bank X while the repayment account is at the bank Y. Hereinafter, the processes shown in FIG. 9 will be described mainly with respect to differences from the processes shown in FIG. 8.

The user P having the bank account at the bank X goes to the store A having the bank account at the bank X, and causes the camera 310a connected to the operation terminal 350a to read a QR code displayed on the screen of the mobile terminal 200. Thus, the user P can receive cash dispensed from the cash handling apparatus 400a. Since the processes in steps S201 to S208 to be performed until the user P receives the cash at the store A are performed in the same way as those in steps S101 to S108 shown in FIG. 8, repeated description is omitted.

The user P having received the cash at the store A performs a transaction completion operation on the mobile terminal 200, whereby the mobile terminal 200 transmits completion information to the bank server 500a of the bank X and the management server 100 of the management company (step S209) .

The bank server 500a identifies, based on the completion information, the amount of the cash that the user P has received at the store A. Moreover, the bank server 500a identifies, based on the completion information, the user P and the bank account of the store A. The bank server 500a performs a transfer of moving a fund equivalent to the amount of the cash received by the user P, from the bank account of the user P to the bank account of the management company at the bank X (step S210). The bank server 500a deposits a commission paid from the bank X, into the bank account of the management company at the bank X (step S211) .

A commission to be paid from the management company to the store A, and a repayment amount, out of the commission, to be deposited into the repayment account, are determined based on settings prepared in advance. The bank server 500a performs a transfer of an amount that is obtained by subtracting the repayment amount from a total amount of the cash received by the user P at the store A and the commission to be paid from the management company to the store A, from the bank account of the management company to the bank account of the store A (step S212) .

After the cash handling apparatus 400a has dispensed the cash to be passed to the user P, the clerk of the store A performs a transaction completion operation on the operation terminal 350a, and the operation terminal 350a notifies the store server 300a that the transaction has been completed. Upon receiving the notification, the store server 300a transmits completion information to the management server 100 (step S213).

The management server 100 identifies, based on the completion information, the amount of the cash that the user P has received from the store A. The management server 100 manages, based on the completion information, fund movement between the banks, i.e., the content of transfer to be performed between the banks (step S214).

The management server 100 instructs the bank server 500a of the bank X to perform a transfer from the bank account of the management company at the bank X to the bank account of the management company at the bank Y (step S215). The management server 100 sums up the amounts of fund movements regarding a plurality of transactions, and performs fund movements between banks by one transfer, which will be described later.

Upon receiving the transfer instruction from the management server 100, the bank server 500a performs the transfer from the bank account of the management company at the bank X to the bank account of the management company at the bank Y (step S216). As a result, a fund including the amount that the store A repays to the creditor, i.e., the repayment amount to be deposited into the repayment account, is moved from the bank account of the management company at the bank X to the bank account of the management company at the bank Y.

The management server 100 instructs the bank server 500b of the bank Y to perform a transfer from the bank account of the management company at the bank Y to the repayment account at the bank Y (step S217). That is, the management server 100 instructs the transfer of the repayment amount by the store A. Upon receiving the transfer instruction from the management server 100, the bank server 500b performs the transfer from the bank account of the management company to the repayment account to deposit a part of the commission paid from the management company to the store A, into the repayment account (step S218).

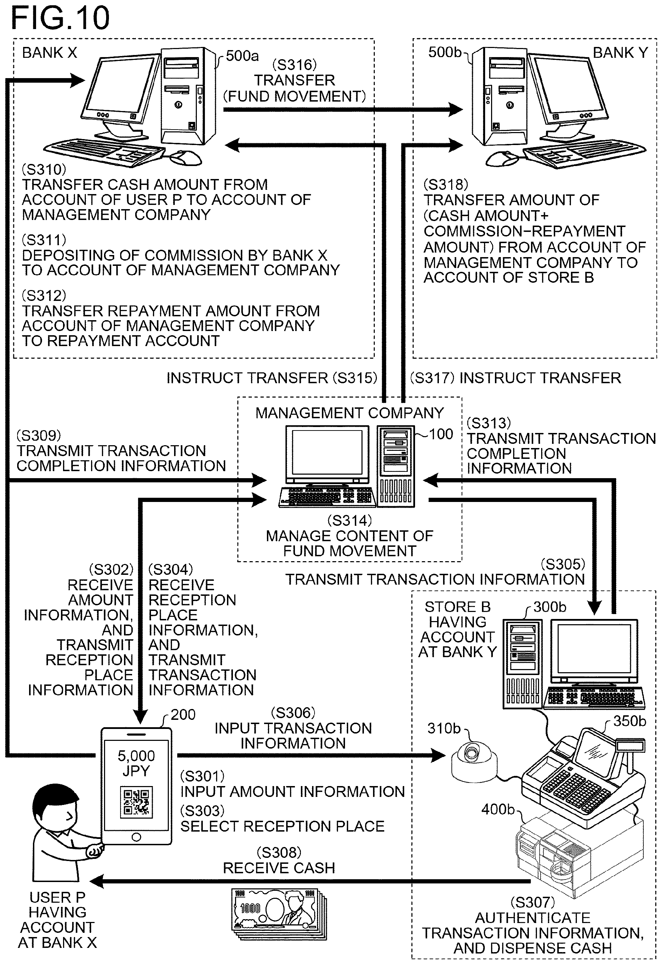

FIG. 10 is a schematic diagram showing a flow of processes in the case where the bank account of the user P and the repayment account are at the bank X while the bank account of the store B is at the bank Y. Hereinafter, the processes shown in FIG. 10 will be described mainly with respect to differences from the processes shown in FIG. 9.

The user P having the bank account at the bank X goes to the store B having the bank account at the bank Y, and causes a camera 310b connected to an operation terminal 350b to read a QR code displayed on the screen of the mobile terminal 200. Thus, the user P can receive cash dispensed from the cash handling apparatus 400b. Since the processes in steps S301 to S308 to be performed until the user P receives the cash at the store B are performed in the same way as those in steps S201 to S208 shown in FIG. 9, repeated description is not necessary.

The user P having received the cash at the store B performs a transaction completion operation on the mobile terminal 200, whereby the mobile terminal 200 transmits completion information to the bank server 500a of the bank X and the management server 100 of the management company (step S309).

The bank server 500a identifies, based on the completion information, the amount of the cash that the user P has received at the store B. Moreover, the bank server 500a identifies, based on the completion information, the bank account of the user P and the bank account of the store B which is not at the bank X. The bank server 500a performs a transfer of moving a fund equivalent to the amount of the cash received by the user P, from the bank account of the user P to the bank account of the management company at the bank X (step S310). The bank server 500a of the bank X deposits a commission paid from the bank X, into the bank account of the management company at the bank X (step S311).

A commission to be paid from the management company to the store B and a repayment amount, out of the commission, to be deposited into the repayment account are determined based on settings prepared in advance. The bank server 500a performs a transfer of the repayment amount from the bank account of the management company at the bank X to the repayment account (step S312).

After the cash handling apparatus 400b has dispensed the cash to be passed to the user P, the clerk of the store B performs transaction completion operation on the operation terminal 350b, and the operation terminal 350b notifies the store server 300b that the transaction has been completed. Upon receiving the notification, the store server 300b transmits completion information to the management server 100 (step S313).

The management server 100 identifies, based on the completion information, the amount of the cash that the user P has received from the store B. The management server 100 manages, based on the completion information, fund movement between the banks, i.e., the content of transfer to be performed between the banks (step S314).

The management server 100 instructs the bank server 500a of the bank X to perform a transfer from the bank account of the management company at the bank X to the bank account of the management company at the bank Y (step S315). The management server 100 sums up the amounts of fund movements regarding a plurality of transactions, and performs fund movements between the banks by one transfer, which will be described later.

Upon receiving the transfer instruction from the management server 100, the bank server 500a performs the transfer from the bank account of the management company at the bank X to the bank account of the management company at the bank Y (step S316). As a result, a fund equivalent to an amount obtained by subtracting the repayment amount from a total amount of the cash received by the user P at the store B and the commission to be paid from the management company to the store B, is moved from the bank account of the management company at the bank X to the bank account of the management company at the bank Y.

The management server 100 instructs the bank server 500b of the bank Y to perform a transfer from the bank account of the management company at the bank Y to the bank account of the store B at the bank Y (step S317). Upon receiving the transfer instruction, the bank server 500b performs the transfer from the bank account of the management company to the bank account of the store B (step S318). As a result, the fund equivalent to the amount obtained by subtracting the repayment amount from the total amount of the cash received by the user P at the store B and the commission to be paid from the management company to the store B, is moved from the bank account of the management company to the bank account of the store B at the bank Y.

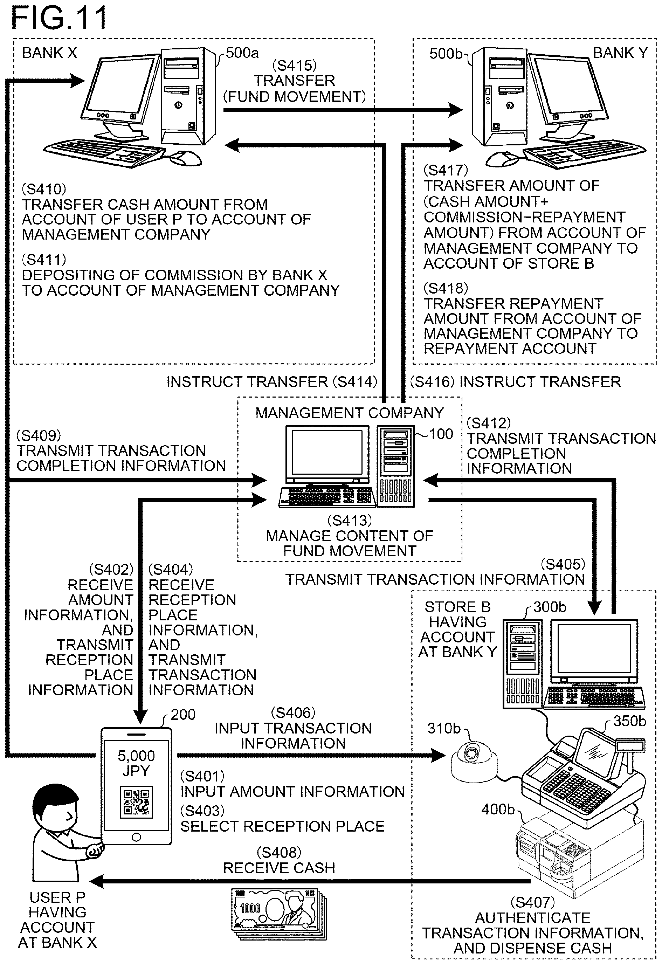

FIG. 11 is a schematic diagram showing a flow of processes in the case where the bank account of the store B and the repayment account are at the bank Y while the bank account of the user P is at the bank X. Hereinafter, the processes shown in FIG. 11 will be described mainly with respect to differences from the processes shown in FIG. 10.

The user P having the bank account at the bank X goes to the store B having the bank account at the bank Y, and causes the camera 310b connected to the operation terminal 350b to read a QR code displayed on the screen of the mobile terminal 200. Thus, the user P can receive cash dispensed from the cash handling apparatus 400b. Thereafter, the bank server 500a of the bank X performs account handling. Since the processes in steps S401 to S411 are performed in the same way as those in steps S301 to S311 shown in FIG. 10, repeated description is omitted.

After the cash handling apparatus 400b has dispensed the cash to be passed to the user P, the clerk of the store B performs a transaction completion operation on the operation terminal 350b, and the operation terminal 350b notifies the store server 300b that the transaction has been completed. Upon receiving the notification, the store server 300b transmits completion information to the management server 100 (step S412).

The management server 100 identifies, based on the completion information, the amount of the cash that the user P has received from the store B. The management server 100 manages, based on the completion information, fund movement between the banks, i.e., the content of transfer to be performed between the banks (step S413).

The management server 100 instructs the bank server 500a of the bank X to perform a transfer from the bank account of the management company at the bank X to the bank account of the management company at the bank Y (step S414). The management server 100 sums up the amounts of fund movements regarding a plurality of transactions, and performs fund movements between the banks by one transfer, which will be described later.

Upon receiving the transfer instruction from the management server 100, the bank server 500a performs the transfer from the bank account of the management company at the bank X to the bank account of the management company at the bank Y (step S415). As a result, a fund equivalent to a total amount of the cash received by the user P at the store B and the commission to be paid from the management company to the store B, is moved from the bank account of the management company at the bank X to the bank account of the management company at the bank Y.

The management server 100 instructs the bank server 500b of the bank Y to perform a transfer from the bank account of the management company at the bank Y, to the bank account of the store B at the bank Y and the repayment account at the bank Y (step S416).

The bank server 500b calculates, based on settings prepared in advance, a commission to be paid from the management company to the store B, and a repayment amount, out of the commission, to be deposited into the repayment account. Alternatively, the management server 100 may calculate the commission and the repayment amount, and notifies the bank server 500b of them.

Upon receiving the transfer instruction from the management server 100, the bank server 500b performs the transfer from the bank account of the management company to the bank account of the store B (step S417). As a result, a fund equivalent to an amount obtained by subtracting the repayment amount from the total amount of the cash received by the user P at the store B and the commission to be paid from the management company to the store B, is moved from the bank account of the management company to the bank account of the store B. Moreover, the bank server 500b performs a transfer of the repayment amount from the bank account of the management company to the repayment account (step S418).

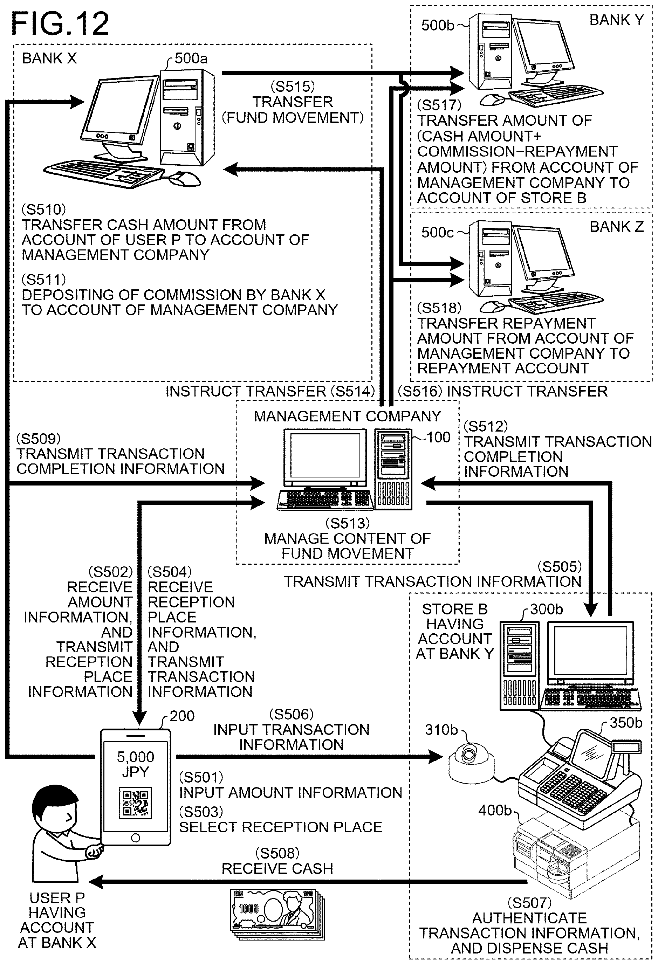

FIG. 12 is a schematic diagram showing a flow of processes in the case where the bank account of the user P, the bank account of the store B, and the repayment account are the different banks X to Z, respectively. The bank account of the user P is at the bank X, the bank account of the store B is at the bank Y, and the repayment account is at the bank Z. Hereinafter, the processes shown in FIG. 12 will be described mainly with respect to differences from the processes shown in FIG. 11.

The user P having the bank account at the bank X goes to the store B having the bank account at the bank Y, and causes the camera 310b connected to the operation terminal 350b to read a QR code displayed on the screen of the mobile terminal 200. Thus, the user P can receive cash dispensed from the cash handling apparatus 400b. Since the processes in steps S501 to S513 to be performed until the management server 100 receives the completion information and manages the content of transfer to be performed between the banks are performed in the same way as those in steps S401 to S413 shown in FIG. 11, repeated description is omitted.

The management server 100 instructs the bank server 500a of the bank X to perform transfers from the bank account of the management company at the bank X, to the bank account of the management company at the bank Y and to the bank account of the management company at the bank Z (step S514). The management server 100 sums up the amounts of fund movements regarding a plurality of transactions, and performs fund movements between banks by one transfer, which will be described later.

Upon receiving the transfer instruction from the management server 100, the bank server 500a performs the transfer from the bank account of the management company at the bank X to the bank account of the management company at the bank Y, and the transfer from the bank account of the management company at the bank X to the bank account of the management company to the bank Z (step S515). As a result, a fund equivalent to an amount obtained by subtracting the repayment amount from a total amount of the cash received by the user P at the store B and the commission to be paid from the management company to the store B, is moved from the bank account of the management company at the bank X to the bank account of the management company at the bank Y. Moreover, a fund equivalent to the repayment amount is transferred from the bank account of the management company at the bank X to the bank account of the management company at the bank Z.

The management server 100 instructs the bank server 500b of the bank Y to perform a transfer between the bank account of the management company and the bank account of the store B at the bank Y, and instructs the bank server 500c of the bank Z to perform a transfer between the bank account of the management company and the repayment account at the bank Z (step S516) .

In the bank Y, the bank server 500b performs a transfer of the amount obtained by subtracting the repayment amount from the total amount of the cash received by the user P at the store B and the commission to be paid from the management company to the store B, from the bank account of the management company to the bank account of the store B (step S517). In the bank Z, the bank server 500c performs a transfer of the repayment amount from the bank account of the management company to the repayment account (step S518).

When a transfer is performed between different banks, the management company has to pay handling fees to the banks. If a transfer between different banks is performed each time a cash passing/receiving transaction is performed between a user and a store, the handling fee that the management company pays to the banks becomes expensive. Therefore, the management server 100 instructs the bank server 500 to perform a transfer after combining a plurality of transactions.

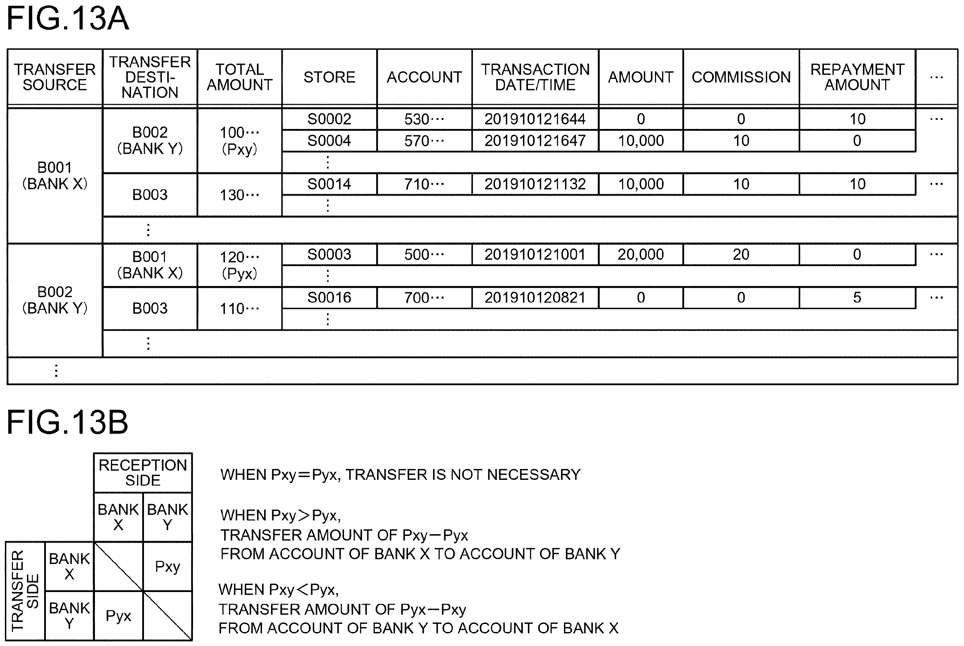

FIGS. 13A and 13B illustrate handling in which the management server 100 determines the content of transfer. FIG. 13A shows an example of information managed by the management server 100, and FIG. 13B illustrates a method for the management server 100 to determine the content of transfer.

As shown in FIG. 13A, the management server 100 manages information on transfers to be performed between banks. The management server 100 manages information shown in FIG. 13A, based on the completion information received from the mobile terminal 200 and the store server 300 as shown in FIGS. 8 to 12. As shown in FIG. 13A, for each of banks to be transfer sources when a transfer is performed between the banks, a bank as a transfer destination and a total amount to be transferred to the bank are managed.

Items of "store", "account", and "transaction date and time" shown in FIG. 13A respectively represent identification information of each store, a bank account of the store, and date and time of a transaction in which the user received cash withdrawn from his/her bank account at the store.

Items of "amount", "commission", and "repayment amount" shown in FIG. 13A respectively represent the amount of cash that the user received at the store, a commission to be paid from the management company to the store, and a repayment amount. For example, when only a transfer of a repayment amount is performed between banks as described in step S25 in FIG. 4 and step S56 in FIG. 7, 0 (zero) is entered under the items of "amount" and "commission", and the repayment amount is entered under the item of "repayment amount". In the examples shown in FIG. 4 and FIG. 7, "repayment amount" is 10 JPY, and "amount" and "commission" are 0 (zero).

When a transfer of an amount obtained by subtracting a repayment amount from a total amount of the cash received by the user at the store and a commission is performed between banks as shown in step S35 in FIG. 5 and step S54 in FIG. 7, corresponding amounts are entered under the items of "amount" and "commission", and 0 (zero) is entered under the item of "repayment amount". In the examples shown in FIG. 5 and FIG. 7, "amount" is 10,000 JPY, "commission" is 10 JPY, and "repayment amount" is 0 (zero).

When a transfer of the cash amount received by the user at the store and a transfer of a commission are performed between banks as shown in step S44 in FIG. 6, corresponding amounts are entered under the items of "amount", "commission", and "repayment amount". In the example shown in FIG. 6, "amount" is 10,000 JPY, "commission" is 10 JPY, and "repayment amount" is 10 JPY.

Under an item of "total amount" shown in FIG. 13A, an amount obtained by summing up the amounts entered under the items of "amount", "commission", and "repayment amount" for each transfer destination, is entered. The information shown in FIG. 13A allows the management server 100 to identify the amounts of funds to be moved between the respective banks, such as the amount of the fund to be moved from the bank X to the bank Y, and the amount of the fund to be moved from the bank Y to the bank X.

The management server 100 performs a transfer between banks at a predetermined timing. For example, the management server 100 performs, twice a day, a transfer instruction to the bank server 500 of each bank that is a transfer source to perform a transfer between banks, as shown in step S215 in FIG. 9, step S315 in FIG. 10, step S414 in FIG. 11, and step S514 in FIG. 12.

The management server 100 manages information on each transaction in which the user received cash at the store, and calculates a total amount of funds to be moved between the banks, as shown in FIG. 13A. The management server 100 transfers the total amount between the banks, thereby collectively handling a plurality of transactions having the same transfer source and the same transfer destination as shown in FIG. 13A.

When instructing the bank server 500 to perform a transfer between banks, the management server 100 determines a transfer amount as shown in FIG. 13B, based on the information shown in FIG. 13A. In FIG. 13B, bank X, bank Y, and amounts Pxy and Pyx correspond to those parenthesized in FIG. 13A.

For example, as shown in FIG. 13B, when the amount Pxy to be transferred from the bank X to the bank Y is equal to the amount Pyx to be transferred from the bank Y to the bank X, the management server 100 determines not to perform a transfer. In this case, since fund movement between the banks is not necessary, the management server 100 does not make transfer instructions to the bank servers 500a, 500b.

When the amount Pxy is larger than the amount Pyx, the management server 100 determines to transfer an amount obtained by subtracting Pyx from Pxy, from the bank X to the bank Y. In this case, a fund equivalent to the amount of (Pxy-Pyx) needs to be moved from the bank X to the bank Y. Therefore, the management server 100 makes a transfer instruction to the bank server 500a of the bank X.

When the amount Pyx is larger than the amount Pxy, the management server 100 determines to transfer an amount obtained by subtracting Pxy from Pyx, from the bank Y to the bank X. In this case, a fund equivalent to the amount of (Pyx-Pxy) needs to be moved from the bank Y to the bank X. Therefore, the management server 100 makes a transfer instruction to the bank server 500b of the bank Y.

While two banks are described as examples in FIG. 13B, the management server 100 manages information as shown in FIG. 13A for all the banks, and determines the amount of a fund to be moved between a plurality of banks. When fund movements are required between a plurality of banks, the management server 100 determines what amount of a fund will be finally moved from which bank to which bank as a result of the fund movements between the banks, and thereafter performs fund movement based on the determination result.

For example, in a case where a fund of 500,000 JPY needs to be moved from the bank X to the bank Y, a fund of 1,000,000 JPY needs to be moved from the bank Y to the bank Z, and a fund of 500,000 JPY needs to be moved from the bank Z to the bank X, it leads to a result in which a fund of 500,000 JPY is moved from the bank Y to the bank Z after these three fund movements. Therefore, the management server 100 performs one fund movement of 500,000 JPY from the bank Y to the bank Z instead of performing the three fund movements between the three banks, thereby completing the fund movement between these three banks.

As described above, as for a plurality of transactions in which users received cash at stores, the management server 100 sums up the amounts to be transferred between the banks and handles fund movements for the plurality of transactions by one transfer. The management server 100 offsets the amount of a fund to be moved from a first bank to a second bank by the amount of a fund to be moved from the second bank to the first bank, and moves a fund equivalent to a resultant difference. That is, the management server 100 does not separately perform a transfer from the first bank to the second bank and a transfer from the second bank to the first bank, but offsets the transfer amounts to handle the transfer amounts by one transfer. This allows the management company to reduce the number of transfers and suppress the transfer fees. Moreover, burden on transfer handling in the banks can also be reduced.

In FIGS. 3 to 12 of the present embodiment, the description has been given for a single transaction in which a user receives, at a store, cash withdrawn from his/her bank account. However, the account handling shown in each figure may not necessarily be performed for each transaction. For example, an instruction for account handling from the management server 100 to the bank server 500 may be performed a predetermined number of times a day, like the transfers between banks described in FIG. 13. Also, account handling for a transfer performed between accounts at the same bank may not necessarily be performed for each transaction. The amounts of a plurality of transfers performed between the same accounts may be collectively handled by one transfer. Moreover, the number of times a transfer at the same bank and the number of times a transfer between different banks are not limited to twice a day as described in FIG. 13, and may be once a day, or three or more times a day.

In the present embodiment, the amount of a commission to be paid from each bank to the management company and the amount of a commission to be paid from the management company to each store are each calculated by multiplying a predetermined commission rate by the amount of cash received by the user at the store. However, the commission determination method is not limited thereto. For example, the amount of the commission to be paid from the bank to the management company may be fixed, and the fixed amount of commission may be paid to the management company for each transaction, irrespective of the amount of cash received by the user at the store. Likewise, the amount of the commission to be paid from the management company to the store may be fixed, and the fixed amount of commission may be paid to the store for each transaction, irrespective of the amount of cash received by the user at the store. Meanwhile, each store may pay a handling fee to the management company that handles the repayment amount. In this case, for example, the aforementioned processes can be performed while the commission to be paid from the management company to the store described in the present embodiment is replaced with an amount obtained by subtracting the handling fee from the commission. Alternatively, when performing the aforementioned account handling for moving a fund from the account of the management company to the account of the store, the account handling is performed by moving an amount obtained by subtracting the handling fee, which is received to the management company from the store, from an amount of the fund.

In the present embodiment, the borrowing handling system automatically performs a repayment process of depositing a repayment amount into a repayment account. However, the borrowing handling system may perform the repayment process after obtaining an approval of a store (debtor). For example, the management server 100 inquires with the store server 300 whether or not to approve the repayment process, and the repayment process is performed only when an approval operation has been performed on the operation unit of the store server 300. The approval operation may not necessarily be performed by using the store server 300, and may be performed by using, for example, a portable communication terminal that is communicable with the management server 100. The management server 100 transmits a notification requesting approval of the repayment process to the portable communication terminal through wireless communication, and receives, from the portable communication terminal, information indicating that the approval operation has been made on the portable communication terminal. Thus, the clerk can perform the approval operation even when he/she cannot operate the store server 300. The clerk who performs the repayment process approval operation is not particularly limited. For example, a person in charge of the store can perform the approval operation by using the portable communication terminal.

For example, in a case where handling of repayment amounts regarding a plurality of transactions is performed a plural number of times a day (e.g., twice a day), a plurality of cash passing/receiving transactions performed between a store and users are collectively handled. Therefore, in the borrowing handling system, a total amount of cash that the store has passed to the users, a total amount of commissions that the store has received from the management company, and a total amount of repayments, over the plurality of transactions, may be displayed on the display unit of the store server 300. At this time, the clerk who has checked the displayed amounts may manually change the repayment amount by operating the operation unit of the store server 300 or the portable communication terminal. If the repayment amount has been changed, the aforementioned processes are performed based on the changed repayment amount in the borrowing handling system. For example, in the examples shown in FIGS. 3 to 12, if the store has changed the repayment amount from 10 JPY to 15 JPY, the processes are performed with the repayment amount having been changed to 15 JPY.

In the present embodiment, a repayment amount is calculated by multiplying a commission that each store receives from the management company, by a predetermined rate that is set in advance. However, the repayment amount determination method in the borrowing handling system is not limited thereto. For example, a repayment amount may be calculated by multiplying a total amount of the cash that the store has passed to the user and the commission, by a predetermined rate that is set in advance.

In the borrowing handling system, the rate of the repayment amount may be changed according to the amount of the commission, or according to the date or the day of the week. In the borrowing handling system, if settings including a condition for changing the rate and a changed rate when satisfying the condition, are prepared in advance, the rate of the repayment amount is changed based on the settings. For example, the store may set the repayment amount to 50% of the commission received from the management company for one transaction in a case where the commission is equal to or less than a predetermined amount, and may set the repayment amount to 45% of the commission in a case where the commission exceeds the predetermined amount. For another example, the store can change the rate of the commission to be allotted to repayment, between weekdays and weekends. For still another example, while the store sets the repayment amount to 50% of the commission to be received from the management company for one transaction, the store may set the repayment amount to 0% in a case where the total of repayment amounts per day exceeds 10,000 JPY.

In the present embodiment, the apparatus installed in each store is composed of: the operation terminal 350 including the reading device such as the camera 310; and the cash handling apparatus 400 which is a change machine connected to the operation terminal 350. However, the device configuration is not limited thereto. A device such as a scanner or a barcode reader may be used as a reading device instead of the camera 310. A device such as a POS (Point of Sales) register or a settlement terminal using a POS system may be used as the operation terminal 350. The cash handling apparatus 400 may not necessarily be installed in the store, and cash that is being stored in a drawer of a cash register such as a POS register may be used when the user receives, at the store, cash withdrawn from his/her bank account. That is, for passing/receiving of cash between the store and the user, a cash storage apparatus capable of dispensing cash, such as the cash handling apparatus 400, a cash register, or a cash storage container may be used.

For example, a POS register that functions as the operation terminal 350 transmits/receives information to/from the mobile terminal 200 of the user by using a scanner connected as a reading device. The cash that the user has withdrawn from his/her bank account is taken out of the drawer of the POS register by the clerk, and the clerk passes the cash to the user. Thus, the aforementioned function and operation of the borrowing handling system can be realized.

For another example, a small-sized settlement terminal, such as a tablet computer, serving as both the store server 300 and the operation terminal 350 may transmit/receive information to/from the mobile terminal 200 of the user. In this case, the cash that the user has withdrawn from the bank account is taken out of the drawer of the cash register, the cash storage container, or the like by the clerk, and the clerk passes the cash to the user. Thus, the aforementioned function and operation of the borrowing handling system can be realized.

The components of the borrowing handling system 1 according to the present embodiment are conceptually functional components, and thus may not necessarily be physically limited thereto. For example, the cash handling apparatus 400 may implement a part or the entirety of the function and operation of the operation terminal 350. The operation terminal 350 may implement a part or the entirety of the function and operation of the store server 300. The store server 300 may implement a part or the entirety of the function and operation of the operation terminal 350. The management server 100 may implement a part or the entirety of the function and operation of the store server 300. The store server 300 may implement a part or the entirety of the function and operation of the management server 100. The management server 100 may implement a part or the entirety of the function and operation of the bank server 500. The bank server 500 may implement a part or the entirety of the function and operation of the management server 100. Distributed or integrated forms of each device are not limited to the forms described above, and all or some of the forms may be distributed or integrated functionally or physically in any unit depending on various loads, use statuses, or the like.

As described above, in the borrowing handling system according to the present embodiment, the user can receive cash withdrawn from his/her bank account, at a store having no ATM, in the same way as the case of using an ATM. The store can obtain a commission from the management company by passing the cash dispensed from the cash handling apparatus to the user, and also can make a profit if the user purchases items at the store. Moreover, the store can allot a part of the amount to be received at its bank account from the management company, for repayment of borrowing. The bank can provide the user having an account at the bank with a cash withdrawal service without installing an ATM in the store. The creditor, who has made a lending contract with an excellent store introduced by the management company, can receive, from the management company, a part of the amount to be transferred from the management company to the store, as a repayment amount by the store. The management company can receive a commission from the bank, because the management company enables the user to receive, at the store, cash withdrawn from his/her bank account. Moreover, the management company can receive a commission from a party to which an excellent store is introduced, and receive a handling fee, from the store, regarding repayment of borrowing.

### INDUSTRIAL APPLICABILITY

As described above, the borrowing handling system and the borrowing handling method according to the present disclosure are useful for efficiently performing repayment of borrowings.

## Claims

1. A borrowing handling system for repayment of borrowing from a store to a creditor by using accounts at financial institutions, the system comprising:
a cash storage apparatus installed in the store, and configured to dispense cash that a user withdraws from an account of the user; and
a management server configured to transmit an instruction for execution of account handling in which, out of a total amount of the cash dispensed from the cash storage apparatus for the user and a commission to be paid from a management company to the store, a repayment amount that the store allots for repayment of the borrowing is deposited into a repayment account for the borrowing, and a remaining amount is deposited into an account of the store, the instruction being transmitted to financial institutions corresponding to the respective accounts.

2. The borrowing handling system according to claim 1, wherein the management server obtains, as the repayment amount, an amount calculated by multiplying the commission by a preset rate.

3. The borrowing handling system according to claim 1 or 2, wherein the management server changes the amount of the commission, according to the amount of the cash dispensed from the cash storage apparatus for the user.

4. The borrowing handling system according to any one of claims 1 to 3, wherein the commission is an amount obtained by subtracting a handling fee to be paid from the store to the management company for a borrowing repayment service performed by the management company, from a commission to be paid from the management company to the store for a cash dispensing service performed by the store for the user.

5. The borrowing handling system according to any one of claims 1 to 4, wherein the management server transmits the instruction for execution of the account handling to the financial institutions, on a condition that the management server receives an approval of the account handling from the store.

6. The borrowing handling system according to claim 5, wherein when the management server has received an instruction to change the repayment amount, from the store, the management server transmits, to the financial institutions, an instruction for execution of the account handling based on the repayment amount having been changed.

7. The borrowing handling system according to any one of claims 1 to 6, wherein in the account handling: the amount of the cash dispensed from the cash storage apparatus for the user is moved from the account of the user to an account of the management company; the repayment amount is moved from the account of the management company to the repayment account; and the remaining amount is moved from the account of the management company to the account of the store.

8. The borrowing handling system according to claim 7, wherein when at least one of the repayment account and the account of the store is at a financial institution different from a financial institution at which the account of the user is present, a fund is further moved between accounts of the management company at the different financial institutions.

9. The borrowing handling system according to claim 8, wherein
the management server manages information on transactions in which the user received cash at the store, and
when there are a plurality of transactions each requiring fund movements between accounts at different financial institutions, the management server sums up amounts to be moved at the respective transactions, and determines the content of the account handling so as to collectively handle the fund movements of the plurality of transactions by one fund movement.

10. The borrowing handling system according to claim 9, wherein when there are a transaction requiring fund movement from a first financial institution to a second financial institution, and a transaction requiring fund movement from the second financial institution to the first financial institution, the management server determines the content of the account handling such that an amount obtained by offsetting amounts to be moved by the respective fund movements are moved in one fund movement.

11. A borrowing handling method for repayment of borrowing from a store to a creditor by using accounts at financial institutions, the method comprising:
causing a cash storage apparatus installed in the store to dispense cash that a user withdraws from an account of the user;
causing a management server to acquire information on an amount of the cash dispensed from the cash storage apparatus for the user; and
causing the management server to transmit an instruction for execution of account handling in which, out of a total amount of the cash dispensed from the cash storage apparatus for the user and a commission to be paid from a management company to the store, a repayment amount that the store allots for repayment of the borrowing is deposited into a repayment account for the borrowing, and a remaining amount is deposited into an account of the store, the instruction being transmitted to financial institutions corresponding to the respective accounts.
